# EUROPÄISCHE PATENTANMELDUNG

(11) **EP 1 000 886 A1**
(43) Veröffentlichungstag der Anmeldung: **17.05.2000**
(21) Anmeldenummer: 99122295.1
(22) Anmeldetag: 09.11.1999
(51) Int. Cl.: B65G 57/00

(54) **Vorrichtung zum Transportieren von Behältern**

(30) Priorität: 10.11.1998 DE 29820013 U
(71) Anmelder: Rössler, Peter, 88693 Deggenhausertal 3 (DE)
(72) Erfinder: Rössler, Peter, 88693 Deggenhausertal 3 (DE)
(74) Vertreter: Hiebsch, Gerhard F., Dipl.-Ing.

(57) **Zusammenfassung**

Bei einer Vorrichtung zum Transportieren von Behältern (28) -- insbesondere von kastenartigen Steigen bevorzugt rechteckigen Grundrisses -- ist ein streifenartiges Organ (18) zur Aufnahme eines Stapels (26) aus den Behältern (28) um eine Achse (Q) aus einer etwa horizontalen Ebene (E) in eine etwa vertikale Lage schwenkbar ausgebildet sowie an seiner den Behältern (28) zugekehrten Oberfläche mit Haft elementen (24) für die Behälter (28) ausgestattet; im Fußbereich der vertikalen Lage des streifenartigen Organs (18) verläuft ein Förderelement (30), dem andernends eine Beladeeinrichtung für Paletten (40) nachgeordnet ist. Das streifenartige Organ (18) ist eine platten- oder brettartige Auflagefläche für den darauf liegenden Stapel (26), dessen Oberfläche als Haftelemente, bevorzugt Vakuumeinrichtungen (24), zur zeitweisen Kontaktnahme mit dem Stapel (26) aufweist. Zudem soll in den Förderweg des Förderelements (30), insbesondere eines zweitrumigen Endlosförderers, ein Arm od.dgl. Element eines um 90° drehbaren Wendewinkels od.dgl. Drehkreuzeinrichtung einragen.

## Beschreibung

Die Erfindung betrifft eine Vorrichtung zum Transportieren von Behältern, insbesondere von kastenartigen Steigen bevorzugt rechteckigen Grundrisses.

Sowohl in der Verpackungsindustrie als auch in der Holzindustrie wird seit längerem nach einer Anlage gesucht, mit der liegende Stapel von Steigen od. dgl. aufgerichtet und auf Transportpaletten gruppiert werden können. Der Erfinder hat sich das Ziel gesetzt, eine derartige Vorrichtung zu konzipieren.

Zur Lösung dieser Aufgabe führt die Lehre des unabhängigen Anspruches; die Unteransprüche geben günstige Weiterbildungen an. Zudem fallen in den Rahmen der Erfindung alle Kombinationen aus zumindest zwei der in der Beschreibung, der Zeichnung und/oder den Ansprüchen offenbarten Merkmale.

Erfindungsgemäß ist ein streifenartiges Organ zur Aufnahme eines solchen Stapels aus Behältern um eine Achse aus einer etwa horizontalen Ebene in eine etwa vertikale Lage schwenkbar ausgebildet sowie an seiner den Behältern bzw. dem Stapel zugekehrten Oberfläche mit Haftelementen für diese Behälter ausgestattet; im Fußbereich der vertikalen Lage des streifenartigen Organs verläuft ein Förderelement, dem andernends eine Beladeeinrichtung für Paletten nachgeordnet ist. Die rechteckig rahmenartigen Steigen werden in der horizontalen Lage des streifenartigen Organs, welches brettartig gestaltet ist, zu dem Stapel zusammengeschoben und bleiben während der Schwenkbewegung in ihre vertikale Lage an ihrer Auflagefläche haften.

Die bevorzugten Haftelemente sind Vakuumsaugelemente an der Oberfläche des streifenartigen Organs, deren Saugkraft bei Erreichen der vertikalen Stellung des Stapels ausgeschaltet wird. Dann steht der Stapelfuß auf dem Förderelement und wird von diesem mitgenommen.

Handelt es sich um rechteckige Steigen unterschiedlicher Seitenlänge, wird der Stapel auf seiner Bewegungsbahn einem Wendewinkel zugeführt, dessen einer Arm in diese Bewegungsbahn einragt und beim Anschlag des Stapels diesen um 90° dreht, wobei dann die kürzeren Steigenseiten den Längskanten des Endlosförderers zugeordnet sind, also zu diesen querstehend der Beladeeinrichtung für die Paletten übergeben werden.

Nach einem weiteren Merkmal der Erfindung weist die Beladeeinrichtung eine an den Endlosförderer anschließende Förderfläche auf, die eine Bewegungsbahn für die Paletten quert; diese Förderfläche ist bevorzugt das Obertrum eines Endlosförderers, zwischen dessen beiden Trumen die Bewegungsbahn für die Paletten verläuft, so dass zur seitlichen Übergabe des Stapels auf eine vorgestellte Palette nur die geringe Höhe der Trumdicke als Stufe überwunden werden muss.

Als günstig hat es sich erwiesen, dass dem freien Ende des Endlosförderers eine Querschiebeeinrichtung zugeordnet ist, die teilweise über der Förderfläche quer zu deren Förderweg verfahrbar angeordnet ist; bevorzugt handelt es sich dabei um ein Winkelelement, dessen einer Schenkel der Stirn des Endlosförderers zugeordnet ist und deren anderer Schenkel-- parallel zu den Förderflächenrändern verlaufend -- über die Förderfläche quer geschoben zu werden vermag, wobei er bei dieser Bewegung die auf der Förderfläche stehenden Stapel mitnimmt und über die eine Förderflächenlängskante auf die Palette schiebt.

Das mit dieser Vorrichtung durchführbare Verfahren zeichnet sich dadurch aus, dass ein Stampel aus den Behältern auf einer etwa horizontalen Ebene liegend zusammengestellt sowie aus dieser Ebene in eine vertikale Lage geschwenkt zu werden vermag, woraufhin er einem in dieser Ebene oder parallel zu ihr verlaufenden Förderelement übergeben wird. Auf diesen wird der vertikale Stapel dann -- wie bereits beschrieben -- der Beladeeinrichtung zugeführt, in welcher die zu beladenden Paletten die Förderfläche unterhalb queren und mit von der Förderfläche abgeschobenen Steigenstapeln beladen wird.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt jeweils in skizzenhafter Wiedergabe in
- Fig. 1:: eine Seitenansicht einer Vorrichtung zum Aufrichten eines säulenartigen Stapels von Steigen od. dgl. kastenartigen Gebilden;
- Fig. 2,3:: Draufsichten auf zwei unterschiedliche Bereiche der Vorrichtung nach Fig. 1;
- Fig. 4:: eine Draufsicht auf ein Detail der Fig. 3 in anderer Betriebsstellung;
- Fig. 5:: eine zu Fig. 1 rechtwinkelige weitere Seitenansicht der Vorrichtung.

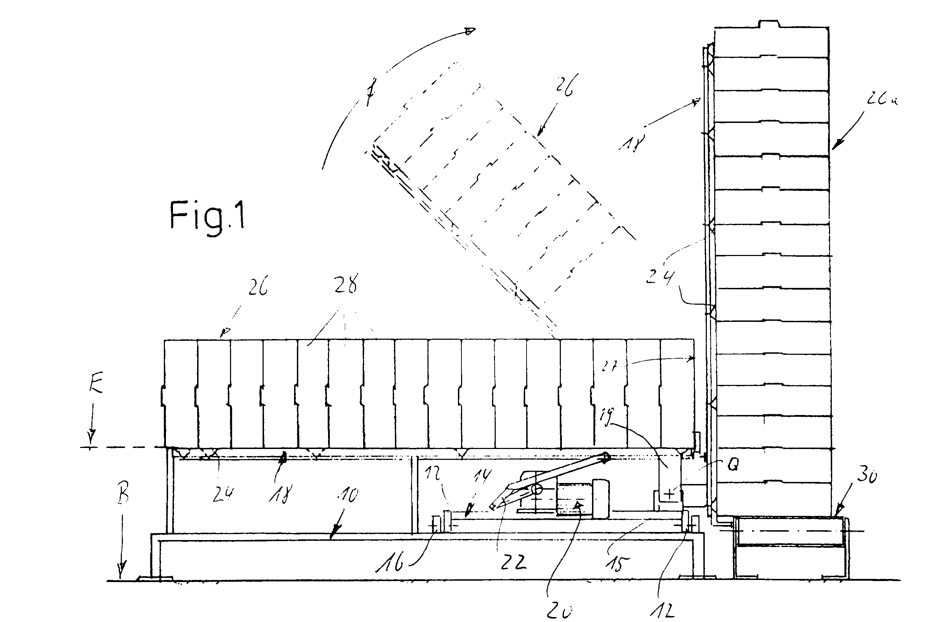

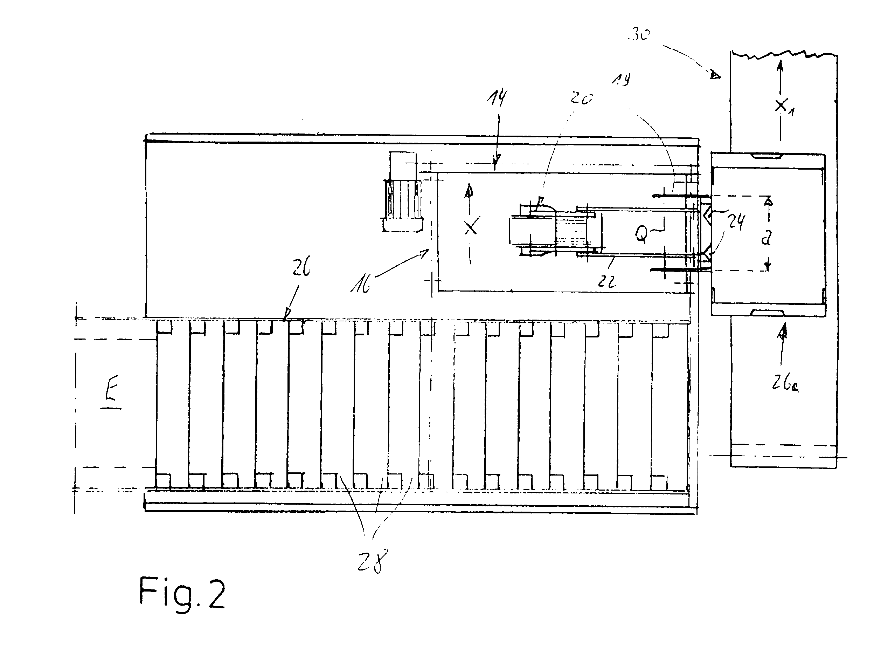

Auf einem von einem Stellboden B aufragenden Untergestell 10 ist ein mit Rollen 12 ausgestaltetes Fahrzeug 14 mittels eines Kettenantriebes 16 horizontal aus einer in Fig. 1 gezeigten Grundposition in Fahrrichtung nach Pfeil x der Fig. 2 verfahrbar.

Eine am Fahrzeug 14 angelenkte platten- oder brettartige Ladefläche 18 der Breite a ist mittels eines -- an einen Antrieb 20 angeschlossenen -- Hubgestänges 22 um eine Gelenkachse Q verschwenkbar, die Lagerarme 19 der Ladefläche 18 sowie Lagerlaschen 15 des Fahrzeuges 14 durchsetzt.

Die Ladefläche 18 ist mit Vakuumsaugeinrichtungen 24 ausgestattet, dank deren Unterdruck ein -- in Fig. 1 horizontal auf der Ladefläche 18 in einer Horizontalebene E ruhender-- säulenartiger Stapel 26 aus hier sechzehn Steigen 28 od. dgl. kastenartigen Gebilden polygonen Umrisses beim Aufschwenken der Ladefläche 18 in Pfeilrichtung f haften bleibt und bei der Schwenkbewegung mitgenommen werden kann.

Ist der Boden 27 des dann vertikalen Stapels 26ₐ auf einem an der Stirnseite des Fahrzeuges 14 parallel zur Fahrrichtung x laufenden Endlosförderer 30 abgesetzt, wird das Vakuum nach synchronem Anlauf von Endlosförderer 30 sowie Fahrzeug 14 unterbrochen und der Stapel 26 freigegeben. Nunmehr schwenkt die Ladefläche 18 wieder in ihre horizontale Lage -- gegen Pfeilrichtung f -- zurück.

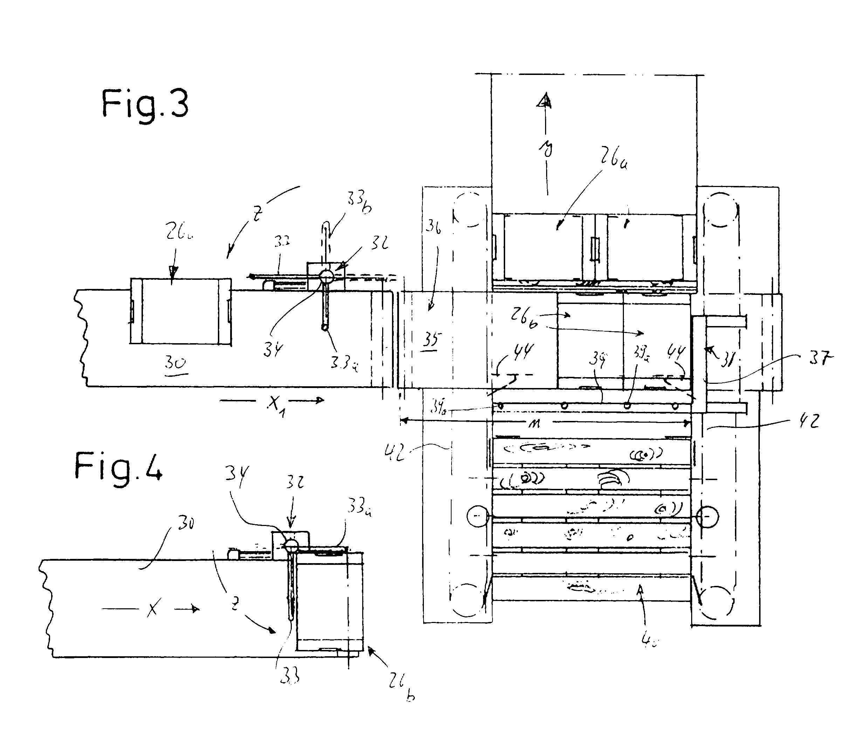

Nahe dem anderen Ende des Transportweges des in Pfeilrichtung x₁ transportierenden Endlosförderers 30 erreicht der stehende Stapel 26ₐ gemäß Fig. 3 einen neben bzw. über dem Endlosförderer 30 angeordneten Wendewinkel 32; dieser besteht aus einem in der dort dargestellten Position parallel zum Endlosförderer 20 stehenden längeren Winkelschenkel 33 und einem dazu rechtwinkeligen kürzeren Winkelschenkel 33ₐ, die beide radial von einer Drehwelle 34 abragen. Ist dieser Wendewinkel 32 außer Betrieb, wird auch der kürzere Winkelschenkel 33ₐ aus dem Transportweg geschwenkt und steht dann in der in Fig. 3 angedeuteten Rastposition 33_{b}.

Sobald der Stapel 26ₐ in jenem Wendewinkel 32 angekommen ist, schwenkt dieser in Pfeilrichtung z um 90° und mit ihm der Stapel 26ₐ. In dieser der Fig. 4 entnehmbaren Querstellung ist der Stapel der besseren Übersicht wegen mit 26_{b} bezeichnet und kann nun einem weiteren -- gleich laufenden -- Transportband 36 geringer Länge n übergeben werden, dessen Umkehrrollen 31 zu jenen des erstbeschriebenen Endlosförderers 30 parallel verlaufen und dessen anderem Ende ein Anschlagarm 37 eines Querschiebers 38 nachgeordnet ist. Vor letzterem stehen in Fig. 3 zwei der quer geschwenkten Stapel 26_{b} auf dem Transportband 36.

In Fig. 3 sind zudem neben dem Transportband 36 zwei nicht geschwenkte Steigenstapel 26ₐ zu erkennen, die vorher als Reihe mittels eines -- mit zusätzlichen Vertikalstäben 39ₐ versehenen -- Längsarmes 39 des Querschiebers 38 in Querrichtung y auf eine Leerpalette 40 abgesetzt worden waren. Letztere wird durch wenigstens einen seitlichen Mitnehmerkettenantrieb 42 bzw. durch an diesem vorgesehene Mitnehmer 44 synchron geschoben.

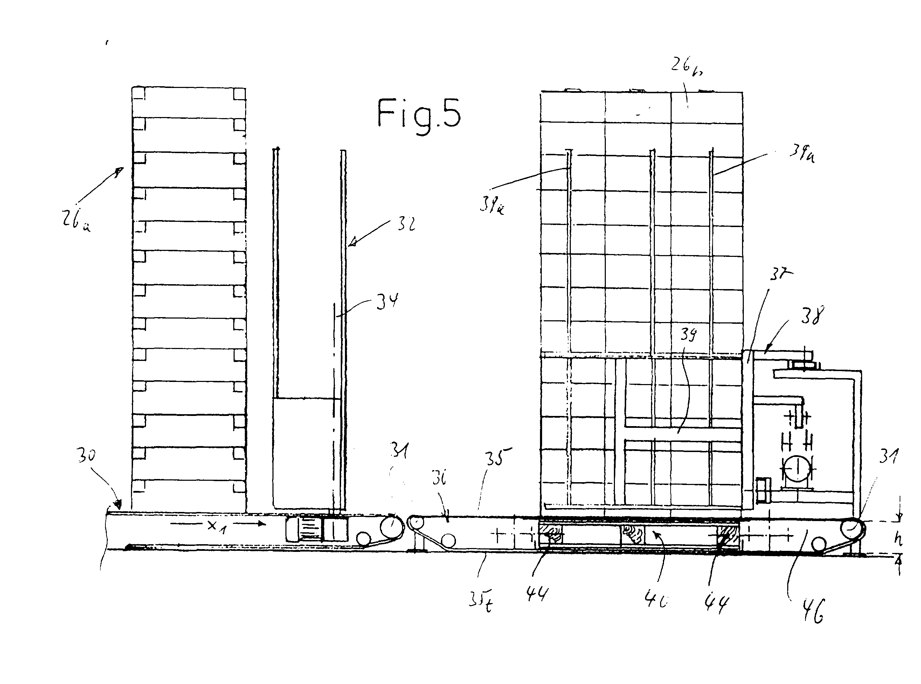

Zwischen Unter- und Obertrum 35 bzw. 35ₜ des Transportbandes 36 ist in Fig. 5 eine der Paletten 40 zu erkennen, welche die Stapel 26ₐ bzw. 26_{b} aufnehmen soll. Eine befüllte Palette 40 wird durch den Mitnehmerkettenantrieb 42 gänzlich aus dem Palettierbereich geschoben. Zum Abholen einer neuen Leerpalette 40 aus der in Fig. 3 gezeigten Position bewegt sich die Mitnehmerkette 42 zurück und unterfährt dabei den angehobenen Leerpalettenstapel. Dann wird letzterer abgesenkt und an der zweiten Palette 40 von unten wieder angehoben. Somit befindet sich eine einzelne Leerpalette 40 vor den Mitnehmern 44 des Mitnehmerkettenantriebs 42, welche die die Leerplatte 40 in die Überschiebeposition transportieren.

In Fig. 5 ist ein stehender Steigenstapel 26ₐ auf dem Endlosförderer 30 kurz vor Einlauf in jenen Wendewinkel 32 dargestellt. Das nachgeordnete Transportband 36 ist -- wie gesagt -- so gestaltet, dass zwei Mitnehmerketten 42 und eine Leerpalette 40 in Querfahrt in einen zwischen den Trumen 35, 35ₜ gebildeten Transportraum 46 der Höhe h hindurchpassen. Somit wird es möglich, die Palettenoberseite sehr dicht unter die Seitenkante des Obertrums 35 von Transportband 36 zu bringen, wodurch eine sehr geringe Absetzstufe für das querzuschiebende Palettiergut 26/28 entsteht.

Mit der beschriebenen Vorrichtung vermögen liegende Steigenstapel 26 gebildet zu werden, die sehr lang bzw. hoch sein können, zudem erfolgt deren Aufstellen und gleichzeitig die Übergabe auf das weiterführende Transportsystem 36. Das Aufbringen des Palettiergutes 26/28 auf eine Palette 40 geschieht mittels Querschiebens über eine einfache, dünne Transportriemenkante.

Der Vorteil dieses Systems ist ersichtlich eine sichere und leicht kontrollierbare Funktionsaufteilung, nämlich durch eine
- fast ebenerdige Funktionsebene;
- geringe Bauhöhe;
- gute Raumausnutzung;
- mobile Flexibilität.

## Patentansprüche

1. Vorrichtung zum Transportieren von Behältern (28), insbesondere von kastenartigen Steigen bevorzugt rechteckigen Grundrisses,
dadurch gekennzeichnet,
dass ein streifenartiges Organ (18) zur Aufnahme eines Stapels (26) aus den Behältern (28) um eine Achse (22) aus einer etwa horizontalen Ebene (E) in eine etwa vertikale Lage schwenkbar ausgebildet sowie an seiner den Behältern (28) zugekehrten Oberfläche mit Haftelementen (24) für die Behälter (28) ausgestattet ist, wobei im Fußbereich der vertikalen Lage des streifenartigen Organs (18) ein Förderelement (30) verläuft, dem andernends eine Beladeeinrichtung für Paletten (40) nachgeordnet ist.

2. Vorrichtung nach Anspruch 1, dadurch gekennzeichnet, dass das streifenartige Organ (18) eine brettartige Auflagefläche für den darauf liegenden Stapel (26) ist sowie die Oberfläche des Organs (18) Vakuumeinrichtungen (24) als Haftelemente zur zeitweisen Kontaktnahme mit dem Stapel (26) aufweist.

3. Vorrichtung nach Anspruch 1 oder 2, dadurch gekennzeichnet, dass dem Förderweg (x₁) des Förderelements (30), insbesondere eines zweitrumigen Endlosförderers, ein um 90° drehbarer Wendewinkel (32) od.dgl. Drehkreuzeinrichtung zugeordnet ist, wobei zumindest ein Arm (33ₐ) od.dgl. Element des Wendewinkels (32) quer zur Förderrichtung des Förderelementes (30) einragbar vorgesehen ist.

4. Vorrichtung nach einem der Ansprüche 1 bis 3, dadurch gekennzeichnet, dass das streifenartige Organ (18) parallel zur Förderrichtung (x₁) des Förderelementes (30) verfahrbar angeordnet ist.

5. Vorrichtung nach einem der Ansprüche 1 bis 4, dadurch gekennzeichnet, dass die Beladeeinrichtung eine an den Endlosförderer (30) anschließende bewegbare Förderfläche (35) aufweist, die eine Bewegungsbahn für die Paletten (40) überquert.

6. Vorrichtung nach Anspruch 5, dadurch gekennzeichnet, dass die Förderfläche (35) ein Transportband, insbesondere das Obertrum eines Endlosförderers (36), ist, unter der die Bewegungsbahn für die Paletten (40) verläuft.

7. Vorrichtung nach Anspruch 5 oder 6, gekennzeichnet durch einen Endlosförderer (36), zwischen dessen beiden Trumen (35,35ₜ) die Bewegungsbahn für die Paletten (40) angeordnet ist.

8. Vorrichtung nach Anspruch 7 oder 8, dadurch gekennzeichnet, dass den Endlosförderer (36) wenigstens ein Mitnehmerantrieb (42) flankiert, von dem Mitnehmer (44) für die Paletten (40) zwischen die Trume (35, 35ₜ) ragen.

9. Vorrichtung nach einem der Ansprüche 1 bis 8, dadurch gekennzeichnet, dass dem freien Ende des Endlosförderers (36) eine Querschiebeeinrichtung (38) zugeordnet ist, die teilweise über der Förderfläche (35) quer zu deren Förderrichtung (x₁) verfahrbar angeordnet ist.

10. Vorrichtung nach Anspruch 9, dadurch gekennzeichnet, dass die Querschiebeeinrichtung (38) ein parallel zur Förderfläche (35) angeordnetes Winkelelement ist, dessen einer Schenkel (37) als Anschlagarm der freien Endkante der Förderfläche (35) zugeordnet ist und deren anderer Schenkel (39) als Längsarm parallel zu einer Längskante der Förderfläche (35) verläuft, über die er verschieblich antreibbar ist.
